# EUROPÄISCHE PATENTSCHRIFT

(11) **EP 0 309 663 B1**
(45) Veröffentlichungstag und Bekanntmachung des Hinweises auf die Patenterteilung: **20.04.1994**
(21) Anmeldenummer: 88111213.0
(22) Anmeldetag: 13.07.1988
(51) Int. Cl.: C02F 1/42

(54) **Zentralsteuerventil für eine Wasseraufbereitungsanlage**
Central control valve for water treatment system
Vanne de commande centrale pour installation de traitement d'eau

(30) Priorität: 17.07.1987 DE 3723696; 07.05.1988 DE 3815729
(43) Veröffentlichungstag der Anmeldung: 05.04.1989
(73) Patentinhaber: Desch, Kurt Michael, Dipl.-Ing., D-83278 Traunstein (DE)
(72) Erfinder: Desch, Kurt Michael, Dipl.-Ing., D-83278 Traunstein (DE)
(74) Vertreter: Haft, von Puttkamer, Berngruber, Czybulka

(56) Entgegenhaltungen:
- FR-A- 1 174 802
- GB-A- 368 297
- US-A- 2 082 623
- US-A- 2 782 726
- US-A- 3 630 231

## Beschreibung

Die Erfindung bezieht sich auf ein Zentralsteuerventil für eine Wasseraufbereitungsanlage gemäß dem Oberbegriff des Patentanspruches 1.

Ein solches Zentralsteuerventil ist z.B. aus der DE-OS 31 41 922 bekannt. Dieses Zentralsteuerventil weist in einem gemeinsamen Gehäuse ein Betriebsventil und ein Kanalventil auf und kann durch entsprechende Ansteuerung dieser beiden Ventile in mehrere Stellungen gebracht werden, in denen die Entnahme von Weichwasser aus einem mit einem Filter versehenen Wasserbehälter möglich ist, nach Verbrauch des Filters die Einleitung von Regeneriermittel in den Wasserbehälter zum Regenerieren des Filters und Ableiten von Hartwasser in einen Kanal und schließlich die Spülung des Wasserbehälters nach der Regenerierung und Ableiten des Spülwassers in den Kanal möglich ist.

Aus der US-A-2 782 726 ist eine Wasseraufbereitungsanlage mit einem Vorratsbehälter bekannt, deren Funktion durch ein Betriebsventil und ein Kanalventil gesteuert wird, die beide als Drehventile ausgebildet sind. Das Betriebsventil, das mit dem Hartwasseranschluß, dem oberen und unteren Behälteranschluß sowie dem Kanalventil verbunden ist, ist ein Vierwegeventil, das Kanalventil, welches außer mit dem Betriebsventil noch mit dem Kanal und dem Weichwasseranschluß verbunden ist, ist ein Dreiwegeventil. In das Betriebsventil ist noch eine Venturi-Düse eingearbeitet, die als Teil einer Wasserstrahlpumpe dazu dient, vor dem Besalzen des Behälters dessen Inhalt teilweise in den Kanal zu entleeren.

Die genannten Zentralsteuerventile sind zur Steuerung einer Wasseraufbereitungsanlage mit jeweils einem Wasserbehälter notwendig. Während des Besalzens und Regenerierens ist es daher nicht möglich, Weichwasser zu entnehmen.

Der Erfindung liegt die Aufgabe zugrunde, ein Zentralsteuerventil anzugeben, das mit kleinen Dimensionen einfach hergestellt und einfach anzusteuern ist und das auch zur Steuerung der Funktion einer Wasseraufbereitungsanlage mit zwei Wasserbehältern geeignet ist.

Gemäß dem kennzeichnenden Teil des Patentanspruches 1 weist hierzu das Zentralsteuerventil zwei unabhängig voneinander betätigbare Vierwege-Kugelventile mit je einer Kugel als Ventilkörper auf, wobei die Kugeln je zwei L-Bohrungen aufweisen. Damit kann auch eine Wasseraufbereitungsanlage mit zwei Wasserbehältern an das Zentralsteuerventil angeschlossen werden, wodurch eine kontinuierliche Entnahme von Weichwasser möglich ist. Die Vierwege-Kugelventile können unabhängig voneinander betätigt werden, wobei zu deren Verstellung bevorzugt nur eine einzige Verstellvorrichtung, z.B. ein kleiner Elektromotor herangezogen wird, der je nach Drehrichtung lediglich eine der beiden Kugeln betätigt. Um während der Verstellung einer Kugel die Verstellung der anderen Kugel zu verhindern, sind zwischen den Antriebswellen der Kugeln und dem Verstellmotor Freiläufe eingesetzt, die in unterschiedlichen Drehrichtungen wirksam sind.

Die beiden Kugelventile können über einen Ringkanal zusätzlich miteinander verbunden werden oder durch eine außen liegende Verrohrung. Jedes Kugelventil hat z.B. hierbei vier Anschlüsse, wobei jeweils drei Anschlüsse den gleichen Nennquerschnitt aufweisen und der vierte einen kleineren Querschnitt hat. Die Anschlüsse mit dem kleineren Querschnitt sind zusammengeführt und verbinden somit hydraulisch die beiden Kugelventile. Der Verbindungskanal ist mit einem Anschluß für den Abflußkanal versehen. Sämtliche Anschlüsse der beiden Kugelventile sind jeweils in Winkelabständen von 90° zueinander angeordnet.

Die erste L-Bohrung innerhalb jeder Kugel, das ist die Hauptbohrung, weist einen Querschnitt auf, der etwa dem größeren Nennquerschnitt der drei Anschlüsse entspricht. Die Mittelachse dieser Hauptbohrung liegt in einer Ebene senkrecht zur Drehachse der Kugel und verläuft vom Außenumfang der Kugel bis zu dieser Drehachse und von dieser in einem rechten Winkel wiederum zum Außenumfang der Kugel. Die in der gleichen Ebene liegende Mittelachse der zweiten L-Bohrung, d.h. der Nebenbohrung, liegt etwa koaxial zu der Mittelachse der Hauptbohrung und ist in Richtung des Außenumfanges der Kugel verlagert. Die Außenwand dieser Nebenbohrung weist in einem Winkelabstand von 90° zwei Dichtteller auf, die so bemessen sind, daß damit die zum Kanal führende Verbindungsbohrung zwischen den beiden Kugelventilen mit dem kleineren Querschnitt abgedichtet werden kann. Befindet sich der Dichtteller im Bereich einer Bohrung mit dem größeren Nennquerschnitt, so verbleibt ein freier Spalt, durch den von diesem Anschluß Flüssigkeit in die Nebenbohrung eintreten kann. Die Dichtteller dieser Nebenbohrung können z.B. federnd abgestützt sein, um die Verbindungsbohrung sicher abzuschließen. Eine andere Möglichkeit besteht darin, die Dichtteller mit Hilfe einer Kulissensteuerung zu betätigen, die während des Verdrehens der Kugeln wirksam wird. Auf diese Weise kann auch mit der Nebenbohrung eine Verbindung eines Anschlusses des Zentralsteuerventils und dem Kanalanschluß hergestellt werden, da die Kulissen- oder Nockensteuerung es ermöglicht, den ziehbaren Dichtteller wahlweise am Zuschlagen zu dem einen kleinen Querschnitt, im allgemeinen demjenigen des Kanalanschlusses zu hindern, also den Dichtteller festzuhalten. Dadurch kann mit der Hauptbohrung bei geöffnetem Kanalanschluß die Verbindung von zwei Anschlüssen mit dem größeren Nennquerschnitt hergestellt werden. Jede der beiden Kugeln bildet für sich mit der Doppel-L-Bohrung ein Kanalventil, und zwar die Kugel des Hartwasserventiles ein Kanalventil für das von der Wasserbehälteroberseite und die Kugel des Weichwasserventils ein Kanalventil für das von der Unterseite des Wasserbehälters kommende Wasser.

Andere als die geschilderten Anordnungen der Anschlüsse des Zentralsteuerventils sind selbstverständlich möglich und ergeben sich aus der Ausgestaltung der Kugeln und deren Drehachse sowie der Verbindung des Zentralsteuerventils mit einem oder zwei Wasserbehältern.

Weitere Ausgestaltungen der Erfindung gehen aus den Unteransprüchen hervor.

Die Erfindung ist in Ausführungsbeispielen anhand der Zeichnung näher erläutert. Es Zeigen:
- Fig. 1: ein schematisches Diagramm einer Wasseraufbereitungsanlage mit zwei Wasserbehältern und einem Zentralsteuerventil gemäß der Erfindung mit zwei unabhängig voneinander ansteuerbaren Kugelventilen;
- Fig. 2: eine teilweise geschnittene Seitenansicht eines Zentralsteuerventils;
- Fig. 3: eine teilweise aufgebrochene Aufsicht auf das Zentralsteuerventil gemäß Fig. 2;
- Fig. 4: einen Schnitt durch das Zentralsteuerventil längs IV-IV in Fig. 2;
- Fig. 5: eine Ansicht in Richtung V auf die als Ventilkörper dienende Kugel eines Kugelventils;
- Fig. 6, 7, 8 und 9: weitere Stellungen des Zentralsteuerventils zur Weichwasserentnahme, zum Besalzen bzw. Regenerieren und zum Spülen der Wasserbehälter;
- Fig. 10: einen Querschnitt durch ein Kugelventil eines Zentralsteuerventiles in einer gegenüber Fig. 4 modifizierten Ausführungsform;
- Fig. 11: einen Querschnitt durch die Kugel eines Kugelventiles mit einem von der Kugel angetriebenen Planetengetriebe zur Steuerung eines Dichttellers der Kugel;
- Fig. 12: eine schematische Darstellung eines Zentralsteuerventils mit zwei mit einem Planetengetriebe versehenen Kugelventilenin einer ersten Ventilstellung;
- Fig. 13: das Zentralsteuerventil gemäß Fig. 12 in einer zweiten Ventilstellung;
- Fig. 14a und b: jeweils Querschnitte durch ein Zentralsteuerventil einer Wasseraufbereitungsanlage mit einem Wasserbehälter in unterschiedlichen Ventil-Stellungen;
- Fig. 15: einen Dichteinsatz für einen Anschluß des Zentralsteuerventils mit einem Ringkanal zur Verbindung mit einem Injektor;
- Fig. 16a: eine schematische Darstellung einer Wasseraufbereitungsanlage mit einem Zentralsteuerventil gemäß der Erfindung;
- Fig. 16b und c: schematische Querschnitte durch das Zentralsteuerventil gemäß Fig. 17a zur Erläuterung der Funktionsweise.
- Fig. 17: einen schematischen Querschnitt durch ein Zentralsteuerventil mit übereinander liegenden Kugelventilen.

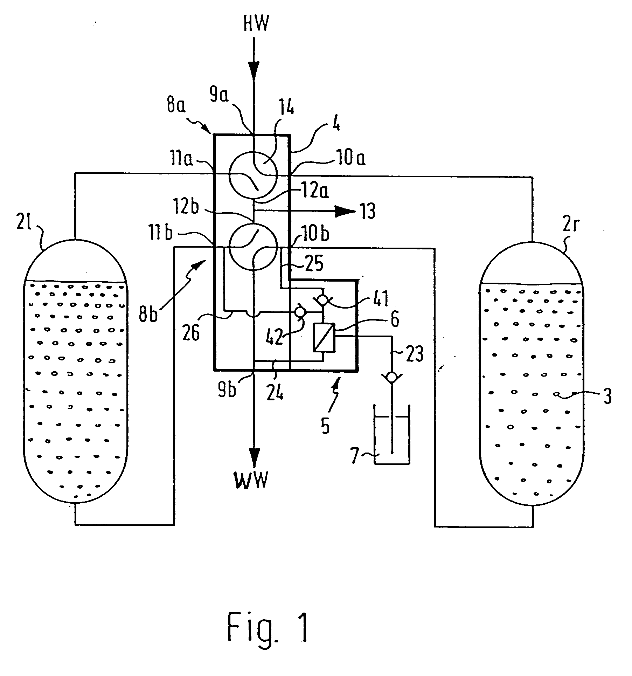

In Fig. 1 ist eine Wasseraufbereitungsanlage 1 dargestellt, die zwei Wasserbehälter 2r, 2l mit einem darin befindlichen Filtermaterial 3, ein Zentralsteuerventil 4 und eine Regeneriervorrichtung 5 aus einem Injektor 6 und einem Regeneriermittelbehälter 7 aufweist.

Das Zentralsteuerventil 4 ist aus zwei Kugelventilen 8a und 8b aufgebaut. Das Kugelventil 8a weist einen Hartwasseranschluß 9a, zwei Behälteranschlüsse 10a und 11a sowie einen Kanalanschluß 12a auf. Das Kugelventil 8b hat einen Weichwasseranschluß 9b, zwei Behälteranschlüsse 10b und 11b sowie einen Kanalanschluß 12b. Die Kanalanschlüsse 12a und 12b sind miteinander verbunden und führen zu einem gemeinsamen Kanal 13. Als Ventilkörper dient in beiden Fällen eine Kugel 14.

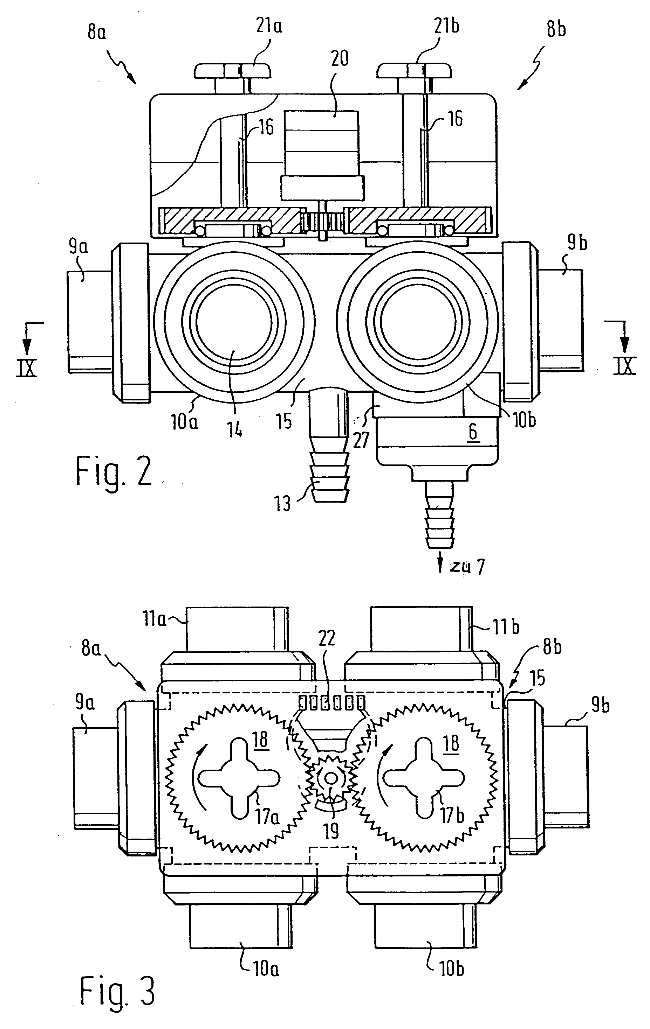

Wie in den Fig. 2 und 3 gezeigt, sind die beiden Kugelventile vorzugsweise in einem gemeinsamen Gehäuse 15 integriert, was jedoch nicht notwendig ist. Jede Kugel 14 ist mit einer Welle 16 versehen, mit der die Kugel durch Drehen in die verschiedenen Ventilstellungen gebracht werden kann. Die Welle 16 des Kugelventils 8a ist über einen Freilauf 17a mit einem Zahnrad 18 verbunden, diejenige des Kugelventiles 8b über einen Freilauf 17b ebenfalls mit einem Zahnrad 18. Die Zähne beider Zahnräder 18 kämmen mit einem Antriebszahnrad 19, das von einem Antriebsmotor, z.B. einem kleinen Elektromotor 20 angetrieben wird. Der Elektromotor 20 kann in beiden Richtungen drehen, was durch die Pfeile im Antriebszahnrad 19 dargestellt ist. Die Freiläufe 17a und 17b sind hierbei so ausgestaltet, daß bei einer Drehrichtung des Antriebszahnrades nur die Welle 16 eines Kugelventiles angetrieben wird, wohingegen die Welle des anderen Kugelventiles aufgrund des zugeordneten Freilaufes nicht dreht. Auf diese Weise können die beiden Kugelventile 8a und 8b jeweils unabhängig voneinander in unterschiedliche Ventilstellungen gebracht werden. Um z.B. eine Ausgangsstellung der beiden Kugelventile 8a und 8b zu ermöglichen, sind die beiden Wellen 16 jeweils noch mit einem Handrad 21a bzw. 21b versehen. Der Antriebsmotor wird z.B. mit Hilfe eines Programmes gesteuert, das auf einem Eingabefeld 22 auf dem Gehäusedeckel eingestellt werden kann. Über dieses Eingabefeld können selbstverständlich auch Einzeloperationen eingegeben werden. Aus Fig. 2 ist noch ersichtlich, daß der Injektor 6 der Regeneriervorrichtung 5 direkt bzw. über einen Injektoranschlußblock 27 am Gehäuse 15 angeordnet ist und einen Sauganschluß 23 aufweist, der zu dem Regeneriermittelbehälter 7 führt. Der Injektor ist eingangsseitig über einen gehäuseinternen Kanal 24 mit dem Weichwasseranschluß 9b verbunden. Der Ausgang des Injektors 6 ist gehäuseintern bzw. in dem an das Ventilgehäuse eingebrachten Injektoranschlußblock 27 über zwei Kanäle 25 und 26, in denen Rückschlagventile 41 bzw. 42 vorgesehen sind, mit den Behälteranschlüssen 10b bzw. 11b verbunden.

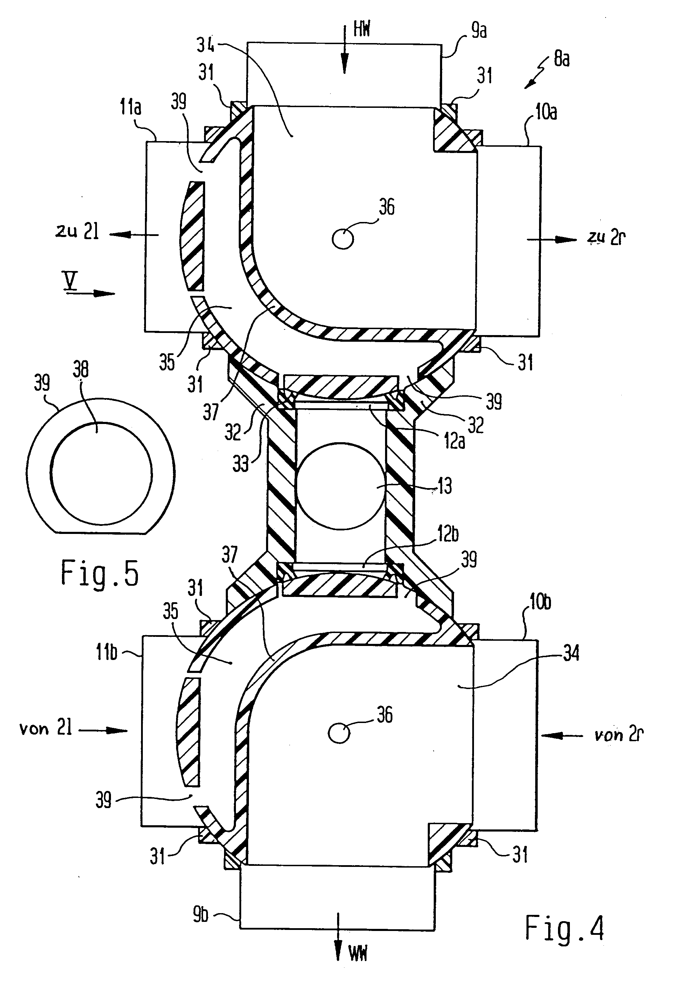

In Fig. 4 ist der Innenaufbau des Zentralsteuerventils gezeigt. Die Anschlüsse 9a, 9b, 10a, 10b, 11a und 11b weisen jeweils den gleichen Querschnitt auf, während die Kanalanschlüsse 12a und 12b einen reduzierten Querschnitt haben. Jede Kugel 14 ist im Gehäuse im Bereich der drei Anschlüsse mit dem größeren Querschnitt in Dichtungen, z.B. Teflondichtungen 31 gegenüber dem Gehäuse abgedichtet. Im Bereich der Kanalanschlüsse ist eine Doppeldichtung vorgesehen, die aus einer Kugeldichtung 32 und einer in diese mittig eingelegten und den Kanalanschluß umgebenden Selbsthaltenden Lippendichtung 33 besteht. Jede Kugel 14 weist zwei L-Bohrungen auf, nämlich eine Hauptbohrung 34 und eine Nebenbohrung 35, deren im Verlauf des L liegenden Mittelachsen in einer Ebene senkrecht zu der mit 36 bezeichneten Drehachse der Kugel liegen. Die Hauptbohrung 34 hat an ihren Einlässen am Kugelumfang und über ihre Länge einen Querschnitt, der im wesentlichen dem Querschnitt der jeweils drei Anschlüsse 9a, 9b, 10a, 10b, 11a bzw. 11b entspricht. Die Hauptbohrung 34 ist von der Nebenbohrung 35 durch eine Wand 37 getrennt, so daß die Nebenbohrung 35 zwischen dieser Wand 37 und dem Außenumfang der Kugel gelegen ist. Die Nebenbohrung 35 hat zwei um 90° gegeneinander versetzte und durch einen Dichtkörper, in diesem Falle einen Dichtteller 38 verengte Einlässe 39, wobei der den Dichtteller 38 umgebende Kreisring am Kugelumfang so ausgeführt ist, daß sich ein sichelförmiger Einlaß 39 ergibt, wie dieses in Fig. 5 dargestellt ist. Der Dichtteller 38 ist so angeordnet, daß mit diesem der Kanalanschluß 12a bzw. 12b abgeschlossen werden kann, daß andererseits dann, wenn der Dichtteller 38 im Bereich der drei anderen Anschlüsse liegt, zwischen diesen Anschlüssen und dem Innenraum der Nebenbohrung 35 über den sichelförmigen Einlaß 39 Verbindung besteht. In der Darstellung gemäß Fig. 4 sind die beiden Kanalanschlüsse 12a und 12b jeweils durch den Dichtteller 38 abgeschlossen, wobei die Dichtwirkung durch die am Umfang der Dichtteller anliegenden Lippendichtung 33 unterstützt wird. In dieser Stellung des Zentralsteuerventils kommunizieren die Anschlüsse 11a und 11b über die sichelförmigen Einlässe 39 mit dem Inneren der Nebenbohrung 35.

Die Funktion des Zentralsteuerventils 4 in der Wasseraufbereitungsanlage 1 wird im folgenden anhand der Fig. 4, 6, 7, 8 und 9 erläutert:
Bei der Betriebsstellung des Zentralsteuerventils 4 gemäß Fig. 4 strömt Hartwasser HW in den Hartwasseranschluß 9a und wird über die Hauptbohrung 34 durch den Behälteranschluß 10a zu dem Einlaß des rechten Wasserbehälters 2r geleitet. In diesem Behälter wird das Hartwasser enthärtet, so daß aus dem unteren Anschluß des rechten Wasserbehälters 2r Weichwasser WW austritt, das über den Anschluß 10b und die Hauptbohrung 34 des zweiten Kugelventils 8b in den Weichwasseranschluß 9b geführt wird. Dort kann Weichwasser WW entnommen werden.

In dem linken Wasserbehälter 2l, der an die Behälteranschlüsse 11a und 11b angeschlossen ist, ist bereits aus einem vorhergehenden Enthärtungsprozeß Weichwasser vorhanden. Dieses Weichwasser befindet sich auch in den Nebenbohrungen 35 der Kugeln 14, kann jedoch nicht in den Kanal 13 strömen, da die Kanalschlüsse 12a und 12b durch die Dichtteller 38 der Kugel abgeschlossen sind.

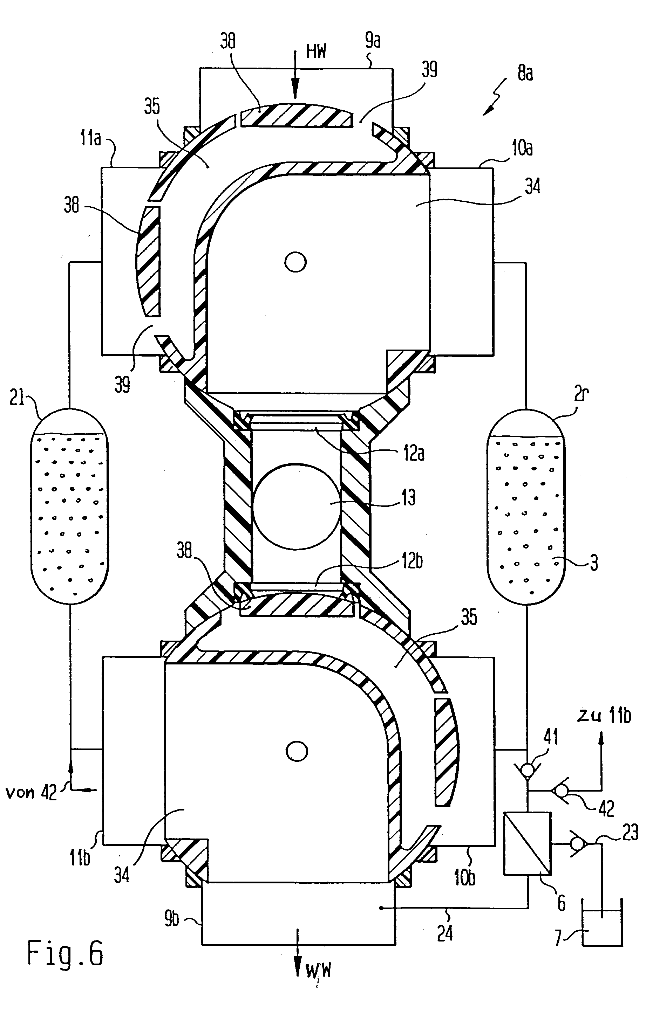

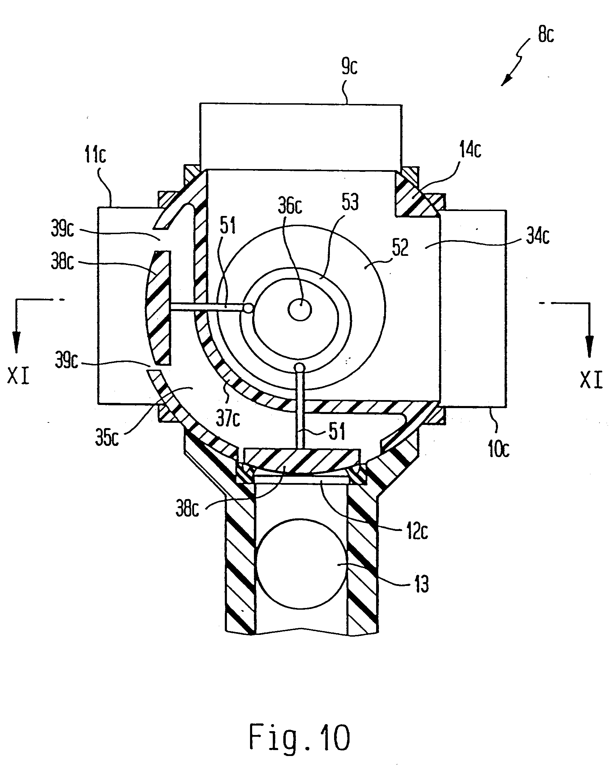

Wenn das Filtermaterial 3 in dem rechten Wasserbehälter 2r erschöpft ist, so wird in einem nächsten Schritt dieses Filtermaterial regeneriert, wobei gleichzeitig Weichwasser aus dem linken Wasserbehälter 2l entnommen werden kann. Die für diese Funktion notwendige Ventilstellung ist in Fig. 6 dargestellt. Diese Ventilstellung wird erreicht, indem beide Kugeln der Kugelventile 8a und 8b im Uhrzeigersinn um 90° gedreht werden. Durch Einschalten des Elektromotores 20 wird das Antriebszahnrad entsprechend Fig. 3 zunächst im Gegenuhrzeigersinn betrieben, wodurch das Zahnrad 18 des Kugelventiles 8a über den Freilauf mitgenommen und in die neue Stellung gedreht wird. Während dieses Antriebs verbleibt das Zahnrad 18 des zweiten Kugelventiles 8b noch in seiner Ausgangsposition. Anschließend wird die Drehrichtung des Motors geändert, wonach das Zahnrad 18 des zweiten Kugelventils 8b angetrieben und damit über die Welle 16 die Kugel dieses Ventiles verdreht wird. Während dieser Verstellung verbleibt die Kugel des Kugelventiles 8a in der bereits erreichten Stellung. In dieser Stellung ist die Entnahme von Wasser aus dem rechten Wasserbehälter 2r über den Anschluß 9b unterbrochen. Jedoch kann weiterhin Weichwasser aus dem linken Wasserbehälter 2l entnommen werden, da durch die Hauptbohrung 34 der Kugel des zweiten Kugelventiles 8b der Weichwasseranschluß 9b mit dem Behälteranschluß 11b verbunden ist. Während der Entnahme von Weichwasser aus diesem linken Wasserbehälter 2l kann dieser mit Hartwasser HW aufgefüllt werden, das durch den Hartwasseranschluß 9a des ersten Kugelventiles 8a über den sichelförmigen Einlaß 39, die Nebenkammer 35, den weiteren sichelförmigen Einlaß 39 und den Behälteranschluß 11a in den Wasserbehälter 2l strömt. Die nachströmende Menge von Hartwasser in den linken Wasserbehälter 2l ist bei dieser Ventilstellung selbstverständlich nicht so hoch wie bei der Ventilstellung gemäß Fig. 4., da hier für den Hartwasserfluß der gesamte Querschnitt der Hauptbohrung 34 zur Verfügung gestellt wurde. Dieser verminderte Hartwasserzufluß reicht jedoch in jedem Falle für einen eingeschränkten Betrieb und kann, wie unten in Verbindung mit Fig. 10 bis 13 erläutert, auch vergrößert werden.

Der Weichwasseranschluß 9b des zweiten Kugelventils 8b ist über den gehäuseinternen Kanal 24 mit dem Injektor 6 verbunden. Das durch den Injektor strömende Wasser übt auf das Regeneriermittel in dem Regeneriermittelbehälter 7 einen Saugdruck aus, so daß Regeneriermittel, im allgemeinen ein Salz, über den Sauganschluß 23 angesaugt wird und über das Rückschlagventil 41 und den Kanal 25, zu dem Behälteranschluß 10b und damit zum unteren Anschluß des rechten Wasserbehälters 2r geleitet wird. Beim Regenerieren des rechten Wasserbehälters 2r wird das Rückschlagventil 42 durch den Wasserdruck in den anderen Wasserbehälter 2l geschlossen gehalten, unabhängig davon, ob Weichwasser entnommen wird oder nicht. Das mit Wasser vermischte Regeneriermittel wird im weiteren Verlauf durch den rechten Wasserbehälter 2r gedrückt, wobei das aus dem oberen Anschluß des rechten Wasserbehälters 2r austretende Wasser über den Behälteranschluß 10a, die Hauptbohrung 34 der Kugel des ersten Kugelventiles 8a und den Kanalanschluß 12a in den Kanal 13 abgeleitet wird. Das in den rechten Wasserbehälter 2r eingeleitete Regeneriermittel füllt dabei auch die Nebenbohrung 35 der Kugel 14 des zweiten Kugelventils 8b, kann jedoch von dort nicht abströmen, da der Kanalanschluß 12b durch den Dichtteller 38 verschlossen ist.

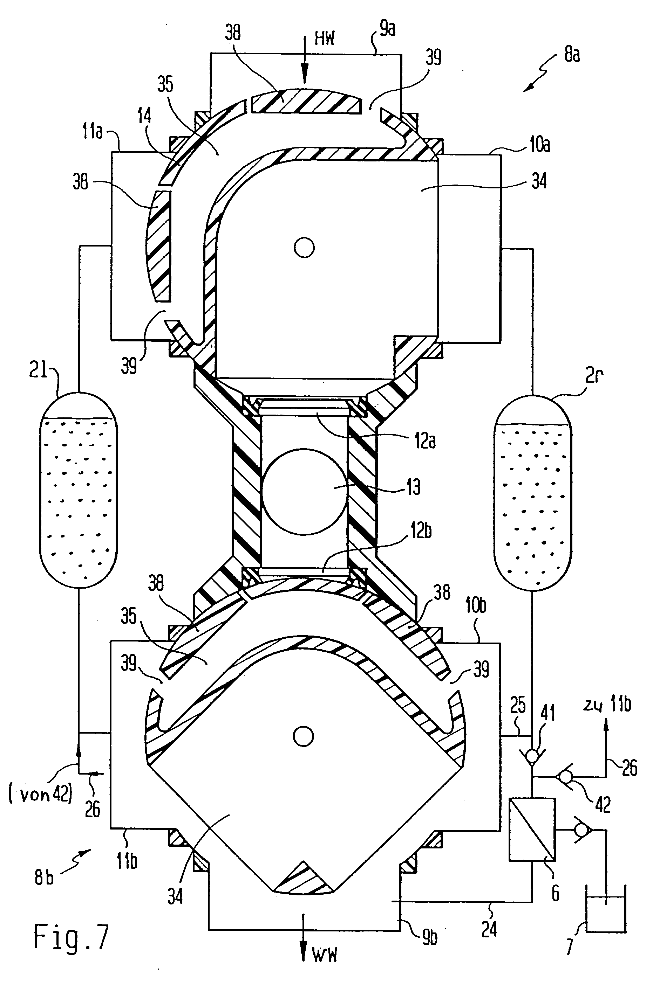

Sobald der rechte Wasserbehälter 2r mit Regeneriermittel gefüllt ist, wird dieser Wasserbehälter mit Weichwasser gespült. Die hierfür notwendige Ventilstellung ist in Fig. 7 dargestellt. Das Kugelventil 8a verbleibt in der gleichen Ventilstellung wie beim vorhergehenden Besalzungsschritt, wohingegen die Kugel 14 des zweiten Kugelventils 8b mit Hilfe des Elektromotores 20 um weitere 315° im Uhrzeigersinn gedreht wird. Wie aus Fig. 7 ersichtlich, besteht jetzt eine Strömungsverbindung zwischen dem Behälteranschluß 11b und dem gegenüberliegenden Behälteranschluß 10b sowohl über die Hauptbohrung 34 als auch über die Nebenbohrung 35 der Kugel 14. Gleichzeitig ist der Weichwasseranschluß 9b geöffnet. Somit kann zum einen Weichwasser aus dem linken Wasserbehälter 2l über den Weichwasseranschluß 9b entnommen werden, zum anderen wird Weichwasser aus dem linken Wasserbehälter 2l über den unteren Anschluß des rechten Wasserbehälters 2r in diesen gedrückt. Hierdurch wird aus diesem rechten Wasserbehälter 2r das Regeneriermittel als Waschwasser zur Ausbringung der Härtebildner über den Anschluß 10a und den Kanalanschluß 12a des ersten Kugelventils 8a in den Kanal 13 abgeleitet. Sobald der rechte Wasserbehälter 2r vollständig mit Weichwasser ausgewaschen ist, ist der Zyklus zur Regeneration des rechten Wasserbehälters abgeschlossen, sofern auf einen Schnellwaschgang des Wasserbehälters von oben nach unten verzichtet wird. Durch die sichel- bzw. halbmondförmige Ausbildung der Ein- und Austrittsöffnungen 39 der Nebenbohrung 35, wie in Fig. 5 dargestellt, ist es möglich, in einer 45°-Zwischenstellung der Kugel 14 den Kanalanschluß 12b verschlossen zu halten.

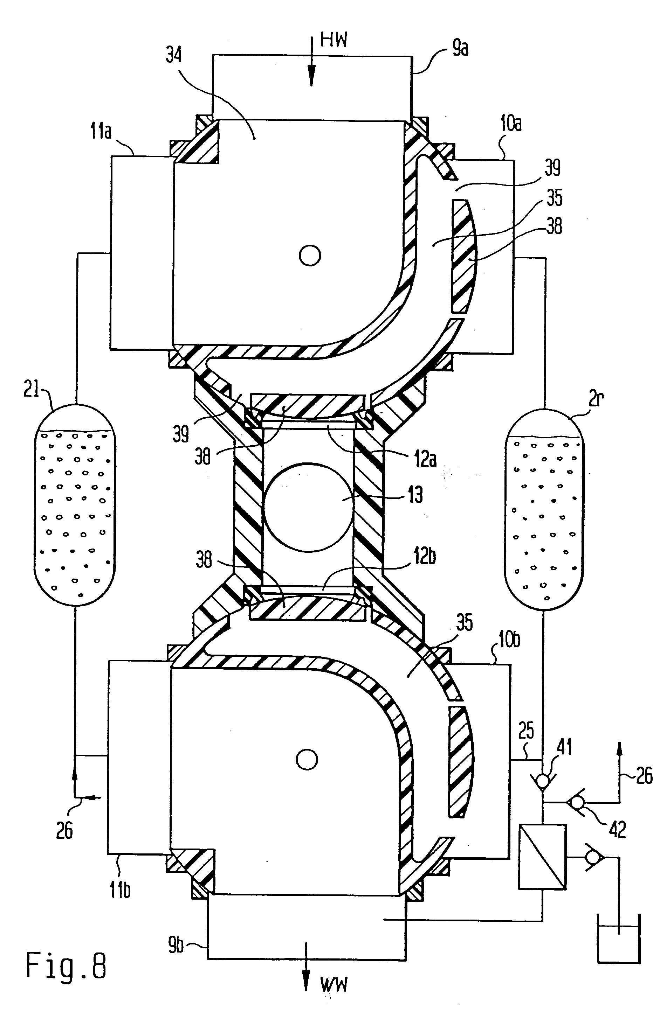

Anschließend wird das Zentralsteuerventil in eine Stellung gemäß Fig. 8 gebracht, in der der rechte Wasserbehälter abgeschlossen ist und Weichwasser weiter aus dem linken Wasserbehälter 2l entnommen werden kann. Hierzu wird die Kugel 14 des ersten Kugelventils 8a um 180° im Uhrzeigersinn verdreht, so daß der Hartwasseranschluß 9a mit dem Behälteranschluß 11a in Verbindung steht. Die Kugel 14 des zweiten Kugelventils 8b wird um 45° im Uhrzeigersinn gedreht, so daß über die Hauptbohrung der Behälteranschluß 11b mit dem Weichwasseranschluß 9b kommuniziert. Der obere Anschluß des rechten Wasserbehälters 2r steht zwar über den sichelförmigen Einlaß 39 an dem Behälteranschluß 10a mit der Nebenbohrung 35 in Verbindung, welche jedoch gegenüber dem Kanalanschluß 12a durch den Dichtteller 38 abgeschlossen ist. Ebenso steht der untere Anschluß des rechten Wasserbehälters 2r über den Behälteranschluß 10b mit der Nebenbohrung 35 der Kugel 14 des zweiten Kugelventils 8b in Verbindung, wobei jedoch ebenfalls der Kanalanschluß 12b durch den Dichtteller 38 abgeschlossen ist.

Sobald das Filtermaterial 3 des linken Wasserbehälters 21 erschöpft ist, wird in einem Schritt entsprechend Fig. 6 das Filtermaterial des linken Wasserbehälters 2l besalzt und dann dieser Wasserbehälter in einem weiteren Schritt gemäß Fig. 7 rückgespült. Die Ventilstellungen für diese Vorgänge ergeben sich zwangsläufig aus den oben beschriebenen.

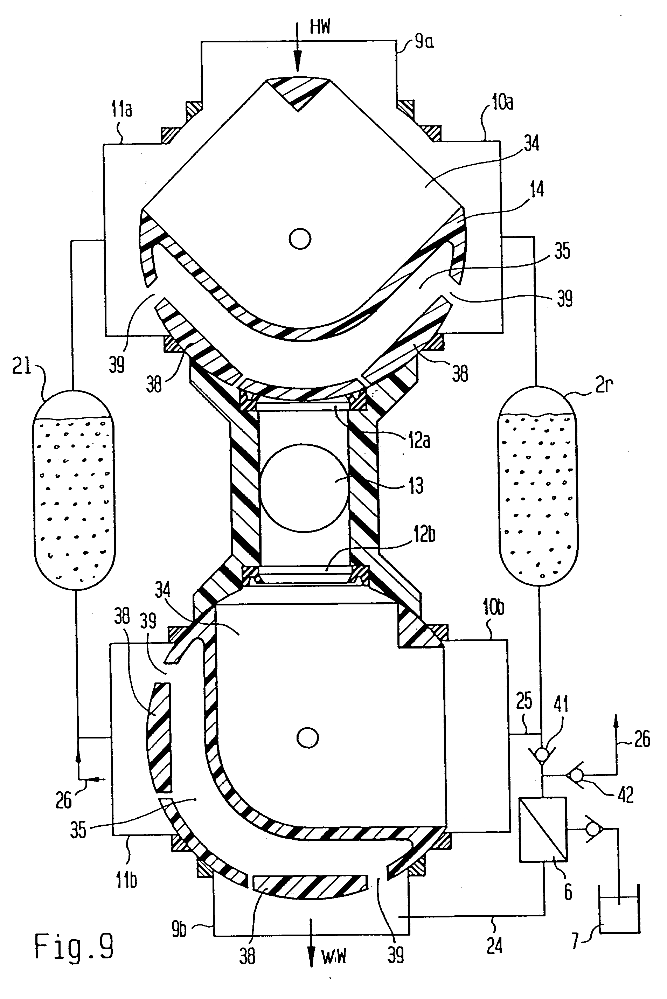

Bei einigen Wasseraufbereitungsanlagen ist es erwünscht, noch einen Schnellwaschgang vorzusehen, wozu in diesem Falle auch der Kanalanschluß 12b des zweiten Kugelventils geöffnet werden muß. Die hierzu notwendige Ventilstellung ist in der Fig. 9 dargestellt. Die Kugel 14 des Kugelventiles 8a wird hierzu in eine Stellung gebracht, die derjenigen entspricht, die das Kugelventil 8b in Fig. 7 einnimmt. Auf diese Weise werden die Behälteranschlüsse 10a und 11a mit dem Hartwasseranschluß 9a verbunden, wobei der Kanalanschluß 12a durch die Kugel verschlossen ist. Die Verbindung der beiden Behälteranschlüsse 10a und 11a erfolgt sowohl über die Hauptbohrung 34 als auch die Nebenbohrung 35. Die Kugel des zweiten Kugelventils 8b steht so, daß der Behälteranschluß 10b über die Hauptbohrung 34 der Kugel mit dem Kanalanschluß 12b kommuniziert. Der Behälteranschluß 11b und der Weichwasseranschluß 9b sind miteinander über die Nebenbohrung 35 in Kontakt. Durch Zuleiten von Hartwasser in den Hartwasseranschluß 9a kann jetzt auch Wasser über den Kanalanschluß 12b in den Kanal 13 gedrückt werden. Auch dieser Schnellwaschvorgang ist durch eine entsprechend spiegelsymmetrische Stellung für den linken Wasserbehälter 2l möglich.

In Fig. 10 ist eine modifizierte Ausführungsform eines der beiden Kugelventile gezeigt, das hier mit 8c bezeichnet ist. Die Anschlüsse 9c bis 12c entsprechen denjenigen der oben beschriebenen Version, ebenso ist die Kugel 14c mit einer Hauptbohrung 34c und einer Nebenbohrung 35c entsprechend der obigen Ausführungsform ausgebildet. Unterschiede bestehen hinsichtlich der hier mit 38c bezeichneten Dichtteller, die nicht mehr fest oder federnd elastisch mit der Kugel 14 verbunden, sondern verschiebbar gelagert sind. Hierzu sind die kugelinneren Seiten der Dichtteller 38c jeweils mit einer Zugstange 51 verbunden, die durch die Trennwand 37c zwischen Haupt- und Nebenbohrung hindurchragen und mit ihren Enden in einer Steuerscheibe 52 entlang einer Steuerkurve 53 geführt sind. Diese Steuerkurve verläuft asymmetrisch um die Drehachse 36c des Kugelventils, und zwar derart, daß der Kanalanschluß 12c bzw. 12b geöffnet werden kann.

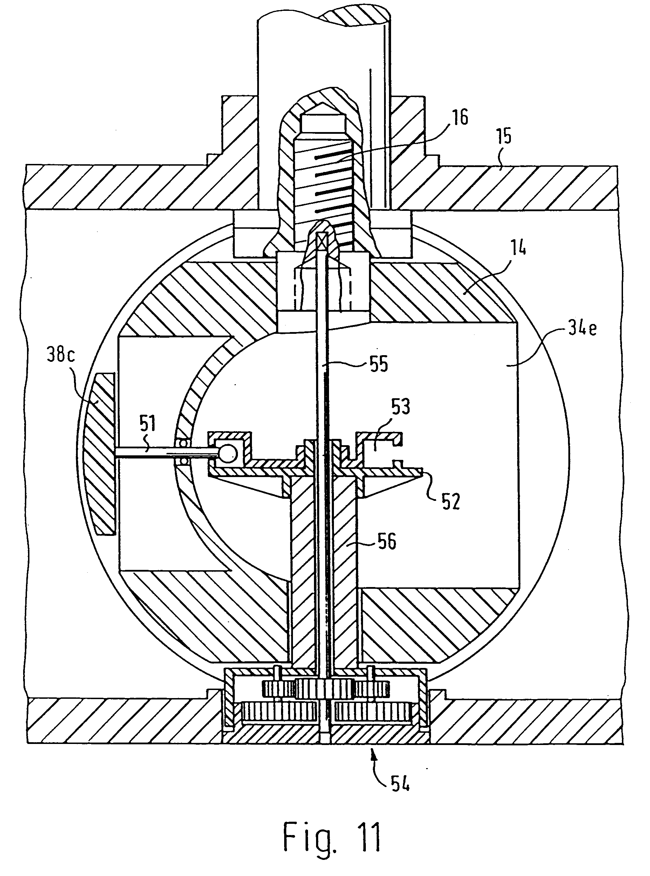

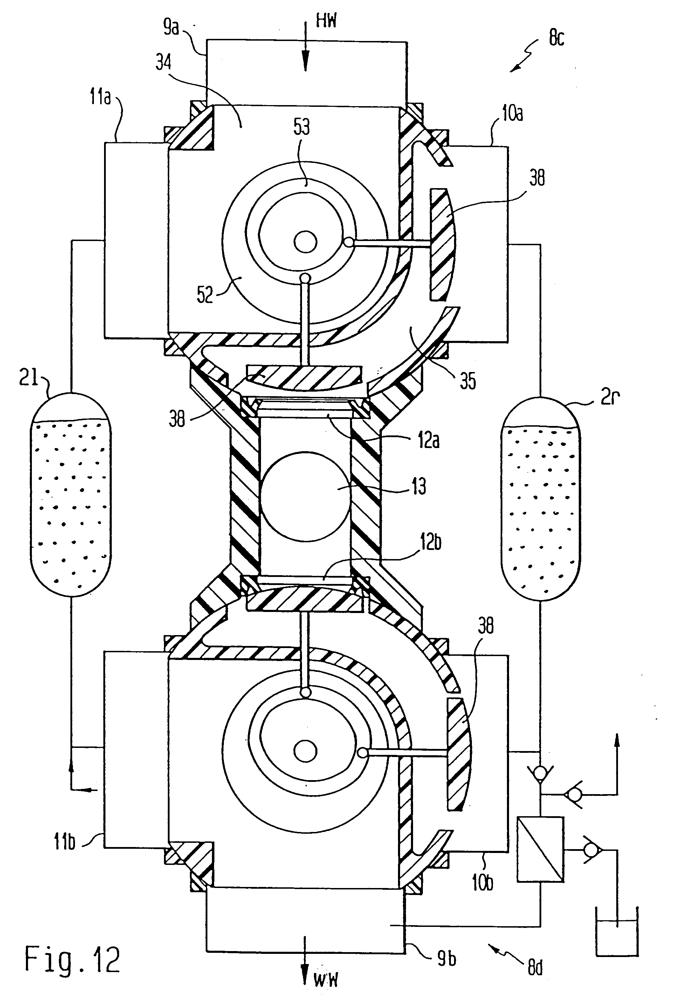

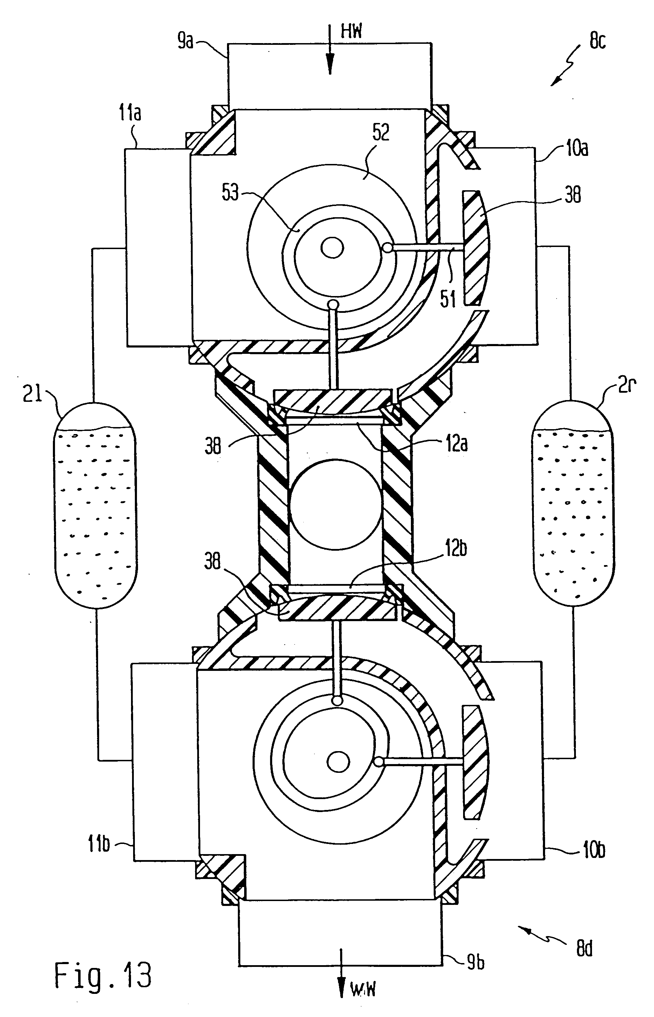

Diese Steuerkurve kann wie zusätzlich in Fig. 11 gezeigt, noch mit Hilfe eines Planetengetriebes 54 direkt durch die Kugel 14 angetrieben werden. Die Welle 16 zum Verstellen der Kugel 14 wird zum Antrieb des Planetengetriebes mit einer dünnen Stange 35 verlängert, die durch die Kugel geführt ist. Auf dem Planetenradträger stützt sich eine Hohlwelle 56 ab, die die Steuerscheibe 52 trägt. Das Getriebe ist hier außerhalb der Kugel 14 angeordnet, es ist jedoch auch eine Anordnung in der Hauptbohrung 34 direkt unterhalb der Steuerscheibe möglich. Wird das Übersetzungsverhältnis des Planetengetriebes z.B. 2:1 gesetzt, so können bei gleichen Kugelstellungen, die sich jedoch durch eine Drehung um 360° unterscheiden, jeweils zwei unterschiedliche Stellungen der Dichtteller 38c erzielt werden. Hiermit ergeben sich vielfältige Variationen , die einzelnen Anschlüsse freizugeben, mehr oder minder abzudichten oder ganz abzudichten. Beispiele zeigen die Fig. 12 und 13.
In der Fig. 12 ist eine Ventilstellung der beiden Kugelventile 8c und 8d gezeigt, die während der Regeneration des rechten Wasserbehälters 2r eingenommen wird. Funktionsmäßig entspricht diese Fig. 12 der obigen Fig. 6. Durch die Steuerung der Ventilteller 38 mit Hilfe der Steuerkurven 53 und dem in Fig. 11 gezeigten Planetengetriebe ist es möglich, während des Regenerierens des Filtermaterials des rechten Wasserbehälters 2r dem linken Wasserbehälter Hartwasser HW über den Hartwasseranschluß 9a und die Hauptbohrung 34 des Kugelventils zuzuführen. Ebenso ist es möglich, Weichwasser aus dem Anschluß 9b ebenfalls über die Hauptbohrung zu entnehmen. Im Gegensatz zu dem Ausführungsbeispiel in Fig. 6 wird hierdurch der Hartwasserzufluß, der dort über die Nebenbohrung 35 erfolgt, nicht beschränkt. Während des Regenerierens des Filtermaterials des rechten Wasserbehälters 2r wird das mit dem Regeneriermittel vermischte Wasser durch die Nebenbohrung 35 der oberen Kugel 14 über den Kanalanschluß 12a in den Kanal 13 gedrückt. Der Einlaßquerschnitt in die Nebenbohrung 35 der Kugel 14 wird hierbei vergrößert, da der Dichtteller 38 aus seiner ansonsten peripheren Lage zurückgezogen werden kann, soweit es die Auslegung der Steuerkurve 53 erlaubt. Der gleiche Effekt könnte mit einem frei aufschlagbaren Dichtteller, der dann zwar nicht am Zuschlagen gehindert werden könnte, ermöglicht werden. Der Dichtteller 38 am Kanalanschluß 12a wird hier in jedem Fall über die Steuerkurve zurückgezogen, so daß der Kanalanschluß 12a freigegeben wird. In Fig. 13 ist die Ventilstellung nach dem Ende des Regenerierens gezeigt. Die Kugeln der beiden Kugelventile 8c und 8d befinden sich zwar in der gleichen Drehlage wie in Fig. 12, wobei jedoch zwischen den Ventilstellungen jeweils 360 °-Drehungen der Kugeln gegenüber Fig. 12 vorliegen. Hierdurch wird der Kanalanschluß 12a durch den Dichtteller 38 verschlossen. Das im rechten Wasserbehälter 2r befindliche Weichwasser kann somit nicht mehr über den Kanal abströmen. Weichwasser wird weiterhin aus dem linken Wasserbehälter 2l entnommen, bis dessen Filtermaterial erschöpft ist. Anschließend wird Weichwasser aus dem rechten Wasserbehälter 2r entnommen, wobei gleichzeitig das Filtermaterial des linken Wasserbehälters regeneriert wird.

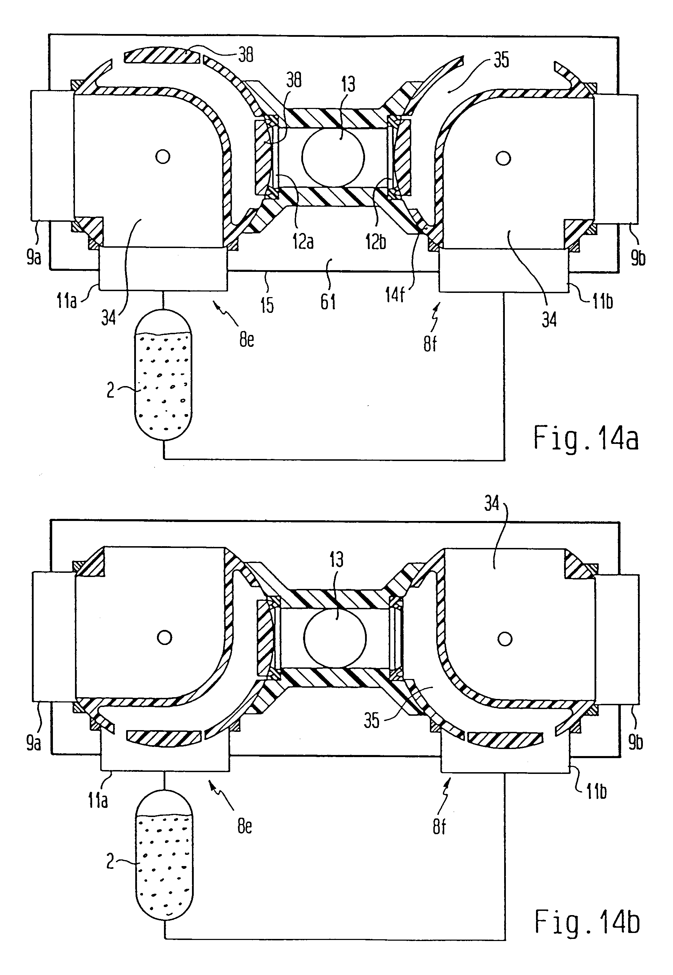

In den Fig. 14a und 14b ist ein Zentralsteuerventil 4 mit zwei Kugelventilen 8e und 8f gezeigt, welches lediglich an einen Wasserbehälter 2 angeschlossen ist. Die Kugeln 14 und 14f weisen jeweils eine Hauptbohrung 34, eine Nebenbohrung 35 und in dieser Nebenbohrung Dichtteller 38 auf, wobei die Kugel 14f des Ventils 8f nur in einem Ein- bzw. Auslaß der Nebenbohrung 35 einen Dichtteller 38 aufweist. Gemäß Fig. 14a wird dem Hartwasseranschluß 9a Hartwasser zugeführt und über die Hauptbohrung 34 und einen Behälteranschluß 11a dem oberen Einlaß des Wasserbehälters 2 zugeführt. Bei der Weichwasserentnahme fließt aus dem Wasserbehälter 2 über den Behälteranschluß 11b des zweiten Kugelventiles 8f durch dessen Hauptbohrung 34 Weichwasser aus dem Weichwasseranschluß 9b. Das Ventilgehäuse 15 umgibt die beiden Kugelventile 8e und 8f, wobei dieses Gehäuse in dem Bereich zwischen den beiden Kugeln selbst als Ringkanal 61 ausgelegt ist, der das die beiden Kanalanschlüsse 12a und 12b verbindende Rohr umgibt. Ist das Filtermaterial in dem Wasserbehälter erschöpft, so wird dieser durch Besalzen regeneriert, wobei mit Hilfe eines nicht dargestellten Injektors in den oberen Anschluß des Behälters Regeneriermittel eingeführt wird. Das WasserRegeneriermittelgemisch wird über den unteren Anschluß des Wasserbehälters, den Behälteranschluß 11b und die Nebenbohrung 35 der Kugel des zweiten Kugelventils 8f in den Kanal 13 geleitet. Dieser ist geöffnet, da an diesem Auslaß der Nebenbohrung kein Dichtteller vorhanden ist. Während dieser Zeit kann am Anschluß 9b Hartwasser entnommen werden. Dieses Hartwasser wird über den Hartwasseranschluß 9a und die Hauptbohrung der Kugel des ersten Kugelventiles 8e in den Ringkanal 61 geleitet und strömt dann durch die Hauptbohrung 34 des zweiten Kugelventiles 8f aus dem Anschluß 9b.

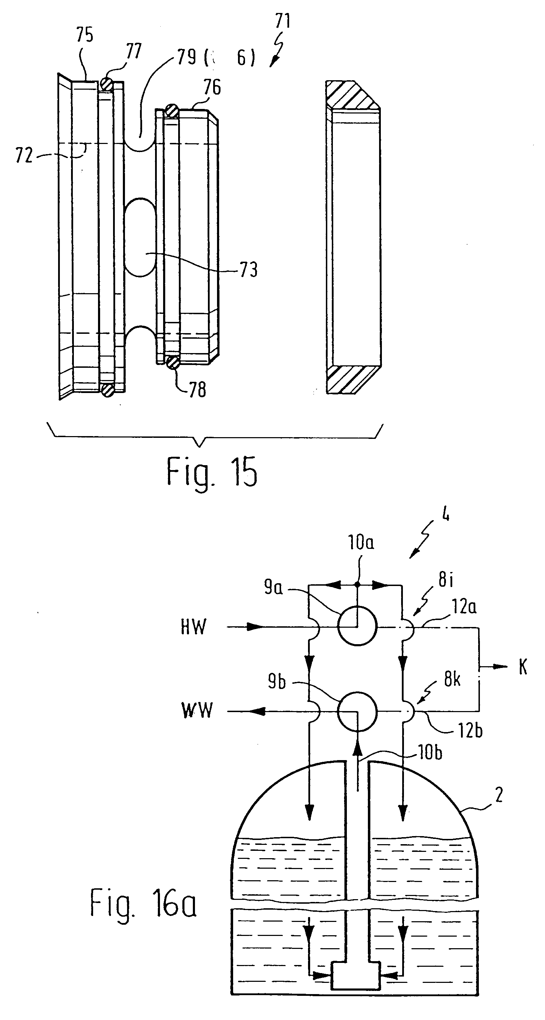

In Fig. 15 ist ein Dichteinsatz 71 gezeigt, der bei Kugelventilen der beschriebenen Art in diejenigen Anschlüsse eingesetzt werden kann, die mit dem Injektor kommunizieren. Bei einem Kugelventil gemäß Fig. 4 sind dieses die Anschlüsse 9b, 10b und 11b. Dieser Dichteinsatz 71 weist einen Durchgangskanal 72 auf, der etwa in seiner Mitte nach außen führende Durchbrüche 73 aufweist. Vor und hinter diesen Durchbrüchen 73 weist der Dichteinsatz zwei Schultern 75 und 76 auf, die an den Wänden des jeweiligen Anschlusses liegen und gegenüber der Innenwand dieses Anschlusses durch O-Ringe 77 und 78 abgedichtet sind. Zwischen diesen O-Ringen wird somit ein Ringkanal 79 innerhalb des Anschlusses gebildet, der mit dem direkt am Ventilgehäuse angeordneten Injektor verbunden werden kann.

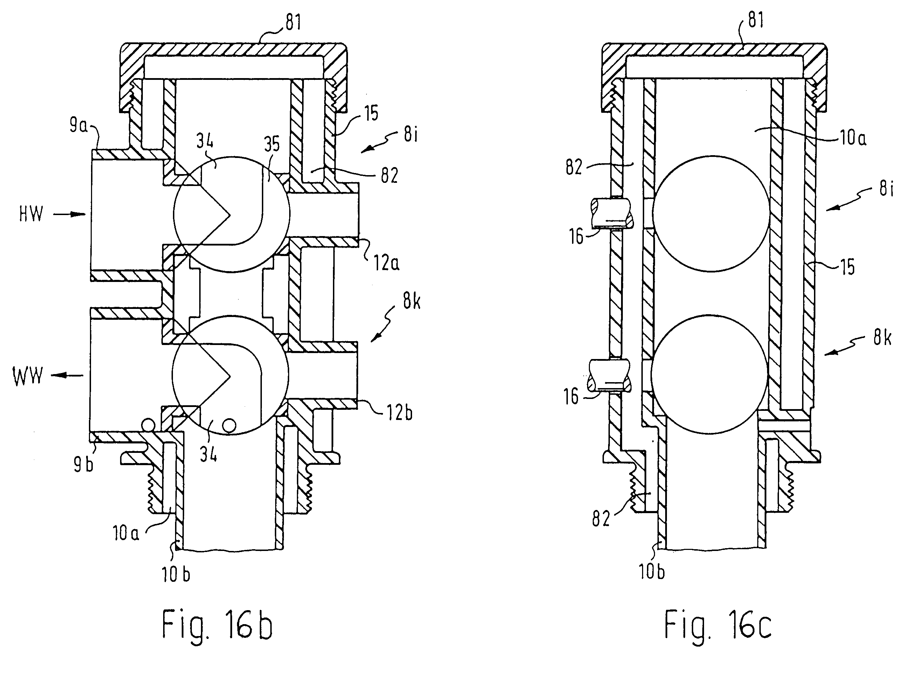

in Fig. 16a ist die Schemadarstellung einer Wasseraufbereitungsanlage 1 mit einem Wasserbehälter 2 und einem Zentralsteuerventil 4 gezeigt, das direkt auf den Behälter aufgesetzt ist. Dieses Zentralsteuerventil weist wiederum zwei Kugelventile 8i und 8k auf. Die Kugeln haben wiederum Haupt- und Nebenbohrungen, wie vorstehend beschrieben. Das obere Kugelventil 8i weist einen seitlichen Hartwasseranschluß 9a, einen oberen Behälteranschluß 10a sowie einen Kanalanschluß 12a auf, während das untere Kugelventil 8k einen ebenfalls seitlich liegenden Weichwasseranschluß 9b, einen unteren Behälteranschluß 10b und einen Kanalanschluß 12b aufweist. Die Kanalanschlüsse 12a und 12b sind mit einem Kanal 13 verbunden. Während des Betriebs strömt Hartwasser durch den Anschluß 9a über den Behälteranschluß 10a an die Oberseite des Wasserbehälters 2. Am unteren Ende des Wasserbehälters wird Weichwasser entnommen, das über den Behälteranschluß 10b zum Weichwasseranschluß 9b geführt wird. Das Ventil ist wie in den Fig. 16b und 16c gezeigt, eine einzige Baueinheit mit einem Ventilgehäuse 15, wobei mit dem Behälteranschluß 10a ein Umlenkdeckel 81 verbunden ist, so daß aus diesem Anschluß 10a austretendes Hartwasser in einen die beiden Kugelventile 8i und 8k umgebenden Ringkanal 82 geleitet wird. Das untere Ende des Ringkanals mündet direkt in die Oberseite des Wasserbehälters. Die Anschlüsse 9a und 12a bzw. 9b und 12b liegen sich direkt gegenüber, wobei senkrecht hierzu die Verstellwelle 16 für die Kugeln angeordnet ist, wie aus Fig. 16c hervorgeht. Die beiden Kugelventile, die zusätzlich zwischen den Anschlüssen 9a Und 9b durch einen in der Längsachse des Ventiles liegenden Verbindungskanal 64 miteinander verbunden sind, haben jeweils Kugeln mit einer Haupt- und einer Nebenbohrung entsprechend dem Zentralsteuerventil gemäß Fig. 14. Die einzelnen Ventilstellungen für die Weichwasserentnahme, für das Besalzen und für das Rückspülen ergeben sich zwangsläufig.

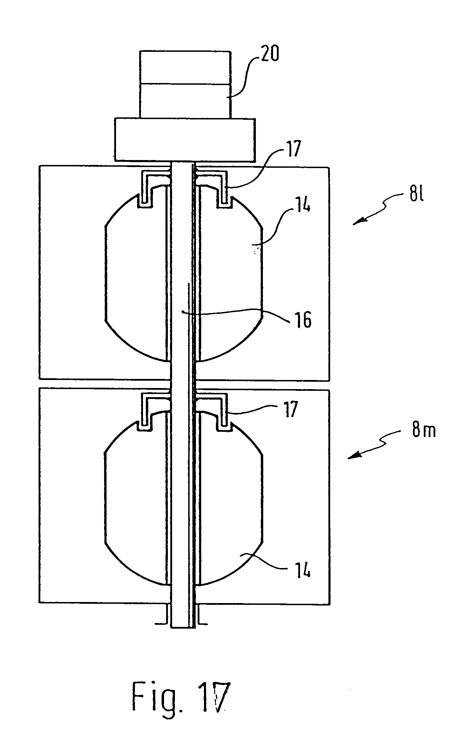

In Fig. 17 sind die Kugelventile 8l und 8m übereinander angeordnet, so daß sie mit einer gemeinsamen Antriebswelle 16 von dem Stellmotor 20 angetrieben werden. Die Kugeln drehen frei auf der Welle und werden über einen links- und einen rechtsdrehenden Freilauf 17 mitgenommen.

Die beschriebenen Ausführungen von Zentralsteuerventilen sind lediglich beispielhaft. Die Kugelventile können in der Geomterie durchaus anders gestaltet werden, wobei die geometrische Anordnung der beiden L-Bohrungen und der Anschlüsse sich jeweils gegenseitig bedingen. So ist es z.B. möglich, die Mittelachsen der beiden L-Bohrungen nicht in eine Ebene, sondern in zwei zueinander senkrechte Ebenen zu legen, wodurch dann auch die Anordnung der Ventilanschlüsse entsprechend geändert wird.

Das Zentralsteuerventil wurde in Verbindung mit den Fig. 1 bis 13 für die Funktionssteuerung einer Wasseraufbereitungsanlage mit zwei Wasserbehältern beschrieben. Diese Ausbildung gestattet es, ständig Weichwasser zu entnehmen. Das jeweils dort gezeigte Zentralsteuerventil kann jedoch auch für die Funktionssteuerung einer Wasseraufbereitungsanlage mit einem einzigen Wasserbehälter, z.B. dem rechten Wasserbehälter verwendet werden. In diesem Falle werden die Behälteranschlüsse 11a und 11b direkt miteinander verbunden. Außerdem wird die Kugel des zweiten Kugelventils lediglich mit einer Bohrung, nämlich der Hauptbohrung versehen. Die oben erläuterten Funktionsschritte zur Entnahme von Weichwasser, zum Regenerieren und zum Spülen ergeben sich ohne weiteres.

Durch entsprechende Anordnung der Anschlüsse und damit auch dem Verlauf der L-Bohrungen kann das Zentralsteuerventil in sämtlichen bei Wasseraufbereitungsarten gewünschten Lagen angeschlossen werden.

## Patentansprüche

1. Zentralsteuerventil für eine Wasseraufbereitungsanlage, die wenigstens einen Wasserbehälter mit einem Filter zum Aufbereiten von Hartwasser in Weichwasser und einen Regeneriermittelbehälter mit einem Regeneriermittel für den Filter aufweist, wobei das Zentralsteuerventil mehrere Ventilstellungen einnimmt und wobei zumindest in einer ersten Ventilstellung die Entnahme von Weichwasser aus dem wenigstens einen Wasserbehälter möglich ist, in einer zweiten Ventilstellung die Einleitung von Regeneriermittel in den wenigstens einen Wasserbehälter zum Regenerieren des Filters und in einer dritten Ventilstellung die Spülung des wenigstens einen Wasserbehälters nach dem Regenerieren des Filters und Ableiten des Spülwassers in einen Kanal ermöglicht wird, dadurch gekennzeichnet, daß das Zentralsteuerventil (4) zwei unabhängig voneinander betätigbare Vierwege-Kugelventile (8a, 8b) mit je einer Kugel (14) als Ventilkörper aufweist und die Kugeln (14) je zwei L-Bohrungen (34, 35) aufweisen.

2. Zentralsteuerventil nach Anspruch 1, dadurch gekennzeichnet, daß das erste Vierwege-Kugelventil (8a) den Hartwassereingang (9a), zwei erste Behälteranschlüsse (10a,11a) sowie einen Kanalanschluß (12a) und das zweite Vierwege-Kugelventil (8b) den Weichwasserausgang (9b), zwei zweite Behälteranschlüsse (10b, 11b) sowie ebenfalls einen Kanalanschluß (12b) aufweist.

3. Zentralsteuerventil nach Anspruch 1 oder 2, dadurch gekennzeichnet, daß der zum Ableiten des Spülwassers in den Kanal vorgesehene Kanalanschluß (12a, 12b) einen gegenüber den anderen Anschlüssen (9a, 9b, 10a, 10b, 11a, 11b) reduzierten Querschnitt aufweist.

4. Zentralsteuerventil nach Anspruch 3, dadurch gekennzeichnet, daß bei jeder Kugel (14) die eine der L-Bohrungen (34) als Hauptbohrung einen dem Querschnitt der Wasser- und Behälteranschlüsse (9a, 9b, 10a, 10b, 11a, 11b) entsprechenden Querschnitt mit freien Einlässen am Kugelumfang aufweist und die Einlässe der als Nebenbohrung ausgebildeten zweiten L-Bohrung (35) durch einen Dichtkörper (38) derart verengt sind, daß dann, wenn ein Einlaß (39) der Nebenbohrung (35) am Kanalanschluß (12a, 12b) anliegt, dieser durch den Dichtkörper (38) verschließbar ist, und dann, wenn ein Einlaß (39) der Nebenbohrung (35) an einem der anderen Anschlüsse (9a, 9b, 10a, 10b, 11a, 11b) anliegt, dieser durch den Dichtkörper (38) nur teilweise abgedeckt ist und mit der Nebenbohrung (35) kommuniziert.

5. Zentralsteuerventil nach Anspruch 4, dadurch gekennzeichnet, daß der Dichtkörper der Nebenbohrung (35) ein Dichtteller (38) ist.

6. Zentralsteuerventil nach einem der vorhergehenden Ansprüche, dadurch gekennzeichnet, daß die Kugeln (14) beider Kugelventile (8a, 8b) identisch aufgebaut sind und jeweils eine Hauptbohrung (34) und eine Nebenbohrung (35) aufweisen.

7. Zentralsteuerventil nach Anspruch 6, dadurch gekennzeichnet, daß die Mittelachsen der Haupt- und Nebenbohrung (34, 35) in Strömungsrichtung in einer gemeinsamen Ebene senkrecht zu der Drehachse (36) der Kugeln (14) liegen.

8. Zentralsteuerventil nach einem der vorhergehenden Ansprüche, dadurch gekennzeichnet, daß die in den Kanal (13) führenden Anschlüsse (Kanalanschlüsse 12a, 12b) beider Kugelventile (8a, 8b) miteinander verbunden sind.

9. Zentralsteuerventil nach einem der Ansprüche 4 bis 8, dadurch gekennzeichnet, daß die Dichtkörper (Dichtteller 38) in der Nebenbohrung (35) der Kugel (14) mit Hilfe einer Stellvorrichtung (52, 53) bewegbar sind.

10. Zentralsteuerventil nach Anspruch 9, dadurch gekennzeichnet, daß die Stellvorrichtung (52, 53) eine innerhalb der Hauptbohrung (34c) gelegene Steuerkurve (52) aufweist, in die Betätigungselemente (51) für die Dichtkörper (38c) eingreifen.

11. Zentralsteuerventil nach Anspruch 10, dadurch gekennzeichnet, daß die Steuerkurve (52) mit einem von der Kugel (14) angetriebenen Planetengetriebe (54) verbunden ist.

12. Zentralsteuerventil nach einem der vorhergehenden Ansprüche, dadurch gekennzeichnet, daß die Kugeln (14) der beiden Kugelventile (8a, 8b) um zueinander parallele Drehachsen (36) verstellbar sind.

13. Zentralsteuerventil nach Anspruch 12, dadurch gekennzeichnet, daß die Kugeln (14) mit in der Drehachse (36) gelegenen Wellen (16) verbunden sind, die jeweils über eine Verdrehung der Kugeln nur in einer Drehrichtung ermöglichende Freiläufe (17a, 17b) mit einer Stellvorrichtung (20) verbunden sind.

14. Zentralsteuerventil nach Anspruch 13, dadurch gekennzeichnet, daß die Wellen (16) der beiden Kugelventile (8a, 8b) jeweils mit einem den Freilauf (17a, 17b) enthaltenden Zahnrad (18) verbunden sind, mit denen ein gemeinsames, von der in beiden Drehrichtungen bestätigbaren Stellvorrichtung (20) antreibbares Antriebszahnrad (19) kämmt.

15. Zentralsteuerventil nach einem der Ansprüche 12 bis 14, dadurch gekennzeichnet, daß die Stellvorrichtung (20) ein Elektromotor ist.

16. Zentralsteuerventil nach einem der vorhergehenden Ansprüche, dadurch gekennzeichnet, daß das Ventilgehäuse neben der im Querschnitt reduzierten zentrisch angeordneten mittigen hydraulischen Verbindung zur Außenwandung des Gehäuses (15) einen zusätzlichen, die beiden Kugelventile (8e, 8f) verbindenden Ringkanal (61) aufweist.

17. Zentralsteuerventil nach Anspruch 4, dadurch gekennzeichnet, daß in der Nebenbohrung (35) als Dichtkörper eine Ventilkugel (62) vorgesehen ist, die die Nebenbohrung nach Art eines Rückschlagventils freigibt oder absperrt.

18. Zentralsteuerventil nach einem der vorhergehenden Ansprüche, dadurch gekennzeichnet, daß mit dem Ventilgehäuse (15) ein Injektor (6) verbunden ist, dessen Sauganschluß (23) mit einem Regeneriermittelbehälter (7) verbunden ist, und daß die mit dem Injektor (6) kommunizierenden Anschlüsse (9b, 10b, 11d) jeweils einen Dichteinsatz (71) aufweisen, der neben einem Durchgangskanal (72) einen zwischen zwei O-Ringen (77, 78) gelegenen Ringkanal (79) aufweist, der gehäuseintern mit einem Anschluß des Injektors (6) verbunden ist.

19. Zentralsteuerventil nach einem der vorhergehenden Ansprüche, dadurch gekennzeichnet, daß ein Behälteranschluß (10a) eines Kugelventils (8i) über einen Umlenkdeckel (8l) mit dem die beiden Kugelventile umgebenden und zum Wasserbehälter (2) führenden Ringkanal (82) verbunden ist.

20. Zentralsteuerventil nach einem der vorhergehenden Ansprüche, dadurch gekennzeichnet, daß die Kugelventile (8l, 8m) übereinander angeordnet sind, und daß die Kugeln (14) über eine gemeinsame Antriebswelle (16) über gegensinnig drehende Freiläufe (17) angetrieben sind.

## Claims

1. Central control valve for a water-treatment system which has at least one water tank with a filter for the treatment of hard water to soft water and a regenerant tank with a regenerant for the filter, the central control valve assuming a plurality of valve positions, and, at least in a first valve position, the extraction of soft water out of the at least one water tank being possible, in a second valve position the introduction of regenerant into the at least one water tank for the regeneration of the filter being made possible, and in the third valve position the flushing of the at least one water tank after the regeneration of the filter and the discharge of the flushing water into a channel being made possible, characterized in that the central control valve (4) has two four-way ball valves (8a, 8b) actuable independently of one another, each with a ball (14) as a valve body, and the balls (14) each have two L-bores (34, 35).

2. Central control valve according to Claim 1, characterized in that the first four-way ball valve (8a) has the hard-water inflow (9a), two first tank connections (10a, 11a) and a channel connection (12a), and the second four-way ball valve (8b) has the soft-water outflow (9b), two second tank connections (10b, 11b) and likewise a channel connection (12b).

3. Central control valve according to Claim 1 or 2, characterized in that the channel connection (12a, 12b) provided for discharging the flushing water into the channel has a cross-section reduced in relation to the other connections (9a, 9b, 10a, 10b, 11a, 11b).

4. Central control valve according to Claim 3, characterized in that, in each ball (14), one of the L-bores (34) as a main bore, has a cross-section corresponding to the cross-section of the water and tank connections (9a, 9b, 10a, 10b, 11a, 11b), with free inlets on the ball circumference, and the inlets of the second L-bore (35) designed as a secondary bore are narrowed by means of a sealing body (38), in such a way that, when an inlet (39) of the secondary bore (35) bears against the channel connection (12a, 12b), the latter can be closed by the sealing body (38), and, when an inlet (39) of the secondary bore (35) bears against one of the other connections (9a, 9b, 10a, 10b, 11a, 11b), the latter is only partially covered by the sealing body (38) and communicates with the secondary bore (35).

5. Central control valve according to Claim 4, characterized in that the sealing body of the secondary bore (35) is a sealing disc (38).

6. Central control valve according to one of the preceding claims, characterized in that the balls (14) of the two ball valves (8a, 8b) are of identical construction and each have a main bore (34) and a secondary bore (35).

7. Central control valve according to Claim 6, characterized in that the centre axes of the main and secondary bores (34, 35) lie, in the direction of flow, in a common plane perpendicular to the axis of rotation (36) of the balls (14).

8. Central control valve according to one of the preceding claims, characterized in that the connections (channel connections 12a, 12b), leading into the channel (13), of the two ball valves (8a, 8b) are connected to one another.

9. Central control valve according to one of Claims 4 to 8, characterized in that the sealing bodies (sealing discs 38) are movable in the secondary bore (35) of the ball (14) by means of an adjusting device (52, 53).

10. Central control valve according to Claim 9, characterized in that the adjusting device (52, 53) has a control cam (52) which is located within the main bore (34c) and into which actuating elements (51) for the sealing bodies (38c) engage.

11. Central control valve according to Claim 10, characterized in that the control cam (52) is connected to a planetary gear (54) driven by the ball (14).

12. Central control valve according to one of the preceding claims, characterized in that the balls (14) of the two ball valves (8a, 8b) are adjustable about axes of rotation (36) parallel to one another.

13. Central control valve according to Claim 12, characterized in that the balls (14) are connected to shafts (16) which lie in the axis of rotation (36) and which are connected to an adjusting device (20) via respective free-wheels (17a, 17b) allowing the balls to rotate in only one direction of rotation.

14. Central control valve according to Claim 13, characterized in that the shafts (16) of the two ball valves (8a, 8b) are each connected to a gear wheel (18) containing the free-wheel (17a, 17b), with which gear wheels meshes a common driving gear wheel (19) drivable by the adjusting device (20) actuable in both directions of rotation.

15. Central control valve according to one of Claims 12 to 14, characterized in that the adjusting device (20) is an electric motor.

16. Central control valve according to one of the preceding claims, characterized in that the valve housing has, as well as the centrically arranged central hydraulic connection of reduced cross-section to the outer wall of the housing (15), an additional annular channel (61) which connects the two ball valves (8e, 8f).

17. Central control valve according to Claim 4, characterized in that there is provided as a sealing body in the secondary bore (35) a valve ball (62) which opens or shuts off the secondary bore in the manner of a non-return valve.

18. Central control valve according to one of the preceding claims, characterized in that there is connected to the valve housing (15) an injector (6), the suction connection (23) of which is connected to a regenerant tank (7), and in that the connections (9b, 10b, 11b) communicating with the injector (6) each have a sealing insert (71) which has, as well as a passage channel (72), an annular channel (79) which is located between two O-rings (77, 78) and which is connected on the inside of the housing to a connection of the injector (6).

19. Central control valve according to one of the preceding claims, characterized in that one tank connection (10a) of one ball valve (8i) is connected via a deflection cover (81) to the annular channel (82) surrounding the two ball valves and leading to the water tank (2).

20. Central control valve according to one of the preceding claims, characterized in that the ball valves (8l, 8m) are arranged one above the other, and in that the balls (14) are driven by means of a common drive shaft (16) via free-wheels (17) rotating in opposite directions.

## Revendications

1. Vanne de commande centrale pour un dispositif de traitement d'eau, comprenant au moins un réservoir d'eau avec un filtre pour transformer de l'eau dure en eau adoucie et un réservoir de produit de régénération du filtre, la vanne de commande centrale ayant plusieurs réglages et la fourniture d'eau adoucie par ledit au moins un réservoir d'eau étant possible par au moins un premier réglage de la vanne, l'amenée de produit de régénération dans ledit au moins un réservoir d'eau étant possible par un deuxième réglage de vanne pour régénérer le filtre, et le rinçage dudit au moins un réservoir d'eau après la régénération du filtre et l'évacuation de l'eau de rinçage par un canal étant possibles par un troisième réglage de vanne, caractérisée en ce que la vanne de commande centrale (4) comprend deux vannes à boule à quatre voies (8a, 8b) commandables indépendamment l'une de l'autre et comprenant chacune une boule (14) en tant que corps de vanne et les boules (14) comprenant chacune deux perçages en L (34, 35).

2. Vanne de commande centrale selon la revendication 1, caractérisée en ce que la première vanne à boule à quatre voies (8a) comprend une entrée d'eau dure (9a), deux premières liaisons aux réservoirs (10a, 11a) ainsi qu'une liaison à un canal (12a) et en ce que la deuxième vanne à boule à quatre voies (8b) comprend une sortie d'eau adoucie (9b), deux deuxièmes liaisons aux réservoirs (10b, 11b) ainsi qu'une liaison au canal (12b).

3. Vanne de commande centrale selon la revendication 1 ou 2, caractérisée en ce que la liaison au canal (12a, 12b) pour évacuer l'eau de rinçage vers le canal a une section inférieure à celle des autres liaisons (9a, 9b, 10a, 10b, 11a, 11b).

4. Vanne de commande centrale selon la revendication 3, caractérisée en ce que, pour chaque boule (14), l'un des perçages en L (34) est un perçage principal ayant une section correspondant à celle des entrée/sortie d'eau et des liaisons aux réservoirs (9a, 9b, 10a, 10b, 11a, 11b) et des admissions sur le pourtour de la boule, les admissions du deuxième perçage L (35), perçage secondaire, étant rétrécies par un corps d'obturation (38) de manière que, quand une admission (39) du perçage secondaire (35) est en correspondance avec la liaison au canal (12a, 12b), cette dernière est obturable par le corps d'obturation (38), et que, quand l'admission (39) du perçage secondaire (35) correspond à l'une des autres liaisons (9a, 9b, 10a, 10b, 11a, 11b), cette dernière est seulement partiellement obturée par le corps d'obturation (38) et communique avec le perçage secondaire (35).

5. Vanne de commande centrale selon la revendication 4, caractérisée en ce que le corps d'obturation du perçage secondaire (35) est un plateau d'obturation (38).

6. Vanne de commande centrale selon l'une quelconque des revendications précédentes, caractérisée en ce que les boules (14) des deux vannes à boule (8a, 8b) sont de constitution identique et présentent chacune un perçage principal (34) et un perçage secondaire (35).

7. Vanne de commande centrale selon la revendication 6, caractérisée en ce que les axes médians des perçages principal et secondaire (34, 35) sont, dans le sens de l'écoulement, dans un plan commun perpendiculaire à l'axe de rotation (36) des boules (14).

8. Vanne de commande centrale selon l'une quelconque des revendications précédentes, caractérisée en ce que les liaisons menant au canal (13) (liaisons au canal 12a, 12b) des deux vannes à boule (8a, 8b) sont reliées l'une à l'autre.

9. Vanne de commande centrale selon l'une des revendications 4 à 8, caractérisée en ce que les corps d'obturation (plateau d'obturation 38) peuvent être déplacés dans les perçages secondaires (35) des boules (14) à l'aide d'un dispositif de réglage (52, 53).

10. Vanne de commande centrale selon la revendication 9, caractérisée en ce que le dispositif de réglage (52, 53) comprend un guide courbe de commande (52) disposé à l'intérieur du perçage principal (34c), dans lequel pénètrent des éléments d'actionnement (51) du corps d'obturation (38c).

11. Vanne de commande centrale selon la revendication 10, caractérisée en ce que le guide courbe de commande (52) est couplé à un entraînement planétaire (54) mû par la boule (14).

12. Vanne de commande centrale selon l'une quelconque des revendications précédentes, caractérisée en ce que les boules (14) des deux vannes à boule (8a, 8b) sont réglables autour d'axes de rotation (36) parallèles l'un à l'autre.

13. Vanne de commande centrale selon la revendication 12, caractérisée en ce que les boules (14) sont reliées à des arbres (16) disposés selon les axes de rotation (36), chacun de ces arbres est, par une rotation des boules, couplé à un dispositif de réglage (20) dans un seul sens de rotation autorisé par des roues libres (17a, 17b).

14. Vanne de commande centrale selon la revendication 13, caractérisée en ce que les arbres (16) des deux vannes à boule (8a, 8b) sont reliés chacun à une roue dentée (18) contenant la roue libre (17a, 17b), avec laquelle engrène une roue dentée de commande (19) commune actionnable par le dispositif de réglage (20) qui peut être actionné dans les deux sens de rotation.

15. Vanne de commande centrale selon l'une quelconque des revendications 12 à 14, caractérisée en ce que le dispositif de réglage (20) est un moteur électrique.

16. Vanne de commande centrale selon l'une quelconque des revendications précédentes, caractérisée en ce que le boîtier de vanne comprend, à proximité de la liaison hydraulique médiane sur la paroi externe du boîtier (15), liaison disposée centralement et réduite en section, un canal annulaire supplémentaire (61) reliant les deux vannes à boule (8e, 8f).

17. Vanne de commande centrale selon la revendication 4, caractérisée en ce qu'elle comprend, dans le perçage secondaire (35), une bille de soupape (62) en tant que corps d'obturation, qui bloque ou ouvre le perçage secondaire à la façon d'une soupape.

18. Vanne de commande centrale selon l'une quelconque des revendications précédentes, caractérisée en ce qu'un injecteur (6) est relié au boîtier (15) de vanne, dont l'entrée d'aspiration (23) est reliée à un réservoir (7) de produit de régénération, et en ce que les liaisons (9b, 10b, 11d) communiquant avec l'injecteur (6) comprennent chacune un dispositif d'étanchéité (71) qui comprend, à proximité d'un canal de passage (72), un canal annulaire (79) disposé entre deux joints toriques (77, 78), qui est relié à l'injecteur (6) de manière interne au boîtier.

19. Vanne de commande centrale selon l'une quelconque des revendications précédentes, caractérisée en ce qu'une liaison à un réservoir (10a) d'une vanne à boule (8i) est reliée au canal annulaire (82) entourant les deux vannes à boule et menant vers le réservoir d'eau (2) par un couvercle de déviation (81).

20. Vanne de commande centrale selon l'une quelconque des revendications précédentes, caractérisée en ce que les vannes à boule (8l, 8m) sont disposées l'une au-dessus de l'autre, et en ce que les boules (14) sont commandées par un arbre commun (16) par l'intermédiaire de roues libres (17) à sens de rotation contraires.
